# EUROPEAN PATENT APPLICATION

(11) **EP 3 015 411 A1**
(43) Date of publication of application: **04.05.2016**
(21) Application number: 15192054.3
(22) Date of filing: 29.10.2015
(51) Int. Cl.: B65H 43/06, B65H 33/00, G06F 3/12

(54) **METHOD FOR LIMITING A HEIGHT OF A STACK OF SHEETS IN A PRINTING DEVICE**

(30) Priority: 30.10.2014 EP 14191044; 01.05.2015 EP 15166114
(71) Applicant: OCE-Technologies B.V., 5914 CA Venlo (NL)
(72) Inventor: SCHOENMAKERS, Erik J.W., 5914 CA Venlo (NL)
(74) Representative: van der Elsen, Jacobus Theodorus Henricus

(57) **Abstract**

The invention relates to a method for limiting a height of a stack of sheets in an output holder of an image reproduction system, the output holder configured to hold a stack of sheets printed upon by the image reproduction system according to a print job submitted to the image reproduction system, the image reproduction system comprising a control unit for controlling the receiving and printing of the print job, the method comprising the steps of receiving a print job at the image reproduction system, the print job comprising image data to be printed and a plurality of print job settings, starting printing the print job by the image reproduction system, and delivering printed sheets of the print job to the output holder,
wherein the plurality of print job settings comprises a setting for a maximum height of a stack in the output holder settable per print job, the method comprises the steps of establishing a value for the setting for the maximum stack height of the stack, and stopping the delivering of the printed sheets of the print job to the output holder upon the stack reaching the maximum height set in the setting for the maximum stack height. The invention also relates to an image reproduction system configured to execute the method according to the invention.

## Description

### Field of the invention

The invention relates to a method for limiting a height of a stack of sheets in an output holder of an image reproduction system, the output holder configured to hold a stack of sheets printed upon by the image reproduction system according to a print job submitted to the image reproduction system, the image reproduction system comprising a control unit for controlling the receiving and printing of the print job, the method comprising the steps of receiving a print job at the image reproduction system, the print job comprising image data to be printed and a plurality of print job settings, starting printing the print job by the image reproduction system, and delivering printed sheets of the print job to the output holder.

The image reproduction system may be a printer, a copier, a multi-functional apparatus or a facsimile apparatus. The sheets may be a kind of medium type, like plain paper, coated paper, transparent sheets, fabric, plastic, wood or metal.

The invention further relates to an image reproduction system which is configured to apply the method according to the invention.

### Background of the invention

Print jobs are printed consecutively by means of an image reproduction system. After printing upon sheets by the image reproduction system the sheets are transported to an output holder attached to the image reproduction system. The output holder may be part of the image reproduction system or coupled to an outlet of the image reproduction system. The output holder has a maximum capacity expressed in a maximum number of sheets in the output holder, expressed in a maximum weight of the amount of sheets in the output holder, and/or expressed in a maximum stack height of the sheets in the output holder. The sheets form a stack of sheets in the output holder. The stack height is limited due to physical limitations. Typically, the output holder itself provides means to report a full output holder when a boundary value is passed. Such a means may be a sensor in the output holder. The image reproduction system will stop printing to the output holder. The boundary value can be set by setting a system setting of the print system.

Nowadays the stack height may be limited according to a system setting for the image reproduction system for all jobs. A problem arises when a slope appears in the stack of finished sheets. The slope may be the result of a sheet curl, a toner distribution on the sheet and/or media characteristics. For example, a medium type may have a sticker at a top right side of the sheet. Another problem arises when post processing of the print job has a constraint with respect to the stack height. For example, a client of the image reproduction system - this may be an offline finisher or an end customer - prescribes for a specific print job a use of specific heights for the printed output.

It is an objective of the present invention to overcome these problems in a user friendly and productive manner.

### Summary of the invention

To achieve the objective the plurality of print job settings comprises a setting for a maximum height of a stack in the output holder settable per print job, and the method comprises the step of establishing a value for the setting for the maximum stack height of the stack, and stopping the delivering of the printed sheets of the print job to the output holder upon the stack reaching the maximum height set in the setting for the maximum stack height.

According to an embodiment the step of establishing the value for the setting for the maximum stack height of the stack comprises the step of entering the value for the setting for the maximum stack height in a job submission tool suitable for submitting the print job to the image reproduction system. Per job intended to be submitted to the image reproduction system, the setting for the maximum stack height can be entered. The maximum stack height may be entered in SI units (cm or mm), number of sheets or number of sets. If a number of copies is specified for the print job, the printed print job will deliver as many sets as the specified number of copies.

According to an embodiment the step of establishing the value for the setting for the maximum stack height of the stack comprises the step of entering the value for the setting for the maximum stack height per medium type to be used for printing the print job, the medium type having a medium property that determines a maximum stack height for the stack in the output holder for said medium type. By defining the maximum stack height as a medium property of a medium type, each print job using that medium type implicitly has at least one setting for the maximum stack height.

According to an embodiment the method comprises the step of determining the maximum stack height of the stack in the output holder that will be used while printing the print job, to be the maximum stack height entered when using the job submission tool. If a maximum stack height is set as a system setting or as a medium property, and also a maximum stack height is set as a print job setting in the print job, the maximum stack height setting set as a print job setting in the print job will prevail.

According to an alternative embodiment the method comprises the step of determining the maximum stack height of the stack in the output holder that will be used while printing the print job, to be the minimum of the maximum stack height entered in the job submission tool and the maximum stack height entered for the medium type. This is advantageous in cases in which a secured implementation is needed.

According to an embodiment the method comprises the step of entering a second maximum stack height for a submitted print job on a local user interface of the image reproduction system, wherein the second maximum stack height overrules the maximum stack height set in the print job settings of the print job.

According to an embodiment the method comprises the step of expressing the maximum stack height in a number of sheets in the stack or in a number of sets in the stack. This is advantageous in case a slope of the stack varies dependent on the image data to be printed, the kind of finishing like stapling, punching, binding, etc. The operator can determine once the maximum number of sheets or the maximum number of sets on the stack that does not lead to any problem. If a number of copies is specified for the print job, the printed print job will deliver as many sets as the specified number of copies.

According to an embodiment the step of stopping the delivering of the printed sheets of the print job to the output holder upon the stack reaching the maximum height set in the setting for the maximum stack height, takes into account the height of printed sheets which are already present in the output holder before starting the printing of the print job. The output holder may not be empty when starting the printing of the print job. The stack formed in the output holder may already be of a significant height.

According to an embodiment the method comprises the step of detecting a stack of sheets in the output holder before starting of the printing of the print job having set a maximum stack height in the print job settings, and removing the stack of sheets from the output holder before starting of the printing of the print job. This is advantageous that the print job starts with an empty output holder. If, for example, the print job has set a maximum stack height in order to let the stack of output of the print job fit in a package after the stack is removed from the output holder, it is efficient that the complete stack printed according to the print job can be put in the package.

The invention also relates to an image reproduction system for printing a print job on sheets, the print job comprising image data and a plurality of print job settings, the image reproduction system comprising a print engine, an output holder configured to hold a stack of sheets printed upon by the printing engine according to the print job submitted to the image reproduction system, a control unit for controlling the receiving of the print job in the image reproduction system and the printing of the print job, and a receiving device being part of the image reproduction system for receiving the submitted print job,
wherein the plurality of print job settings comprises a setting for a maximum height of a stack in the output holder settable per print job, and the control unit is configured to establishing a value for the setting for the maximum stack height of the stack and to stop delivering of printed sheets of the print job to the output holder upon the stack in the output holder reaching the maximum height set in the setting for the maximum stack height. Further embodiments of the image reproduction system are configured to execute any of the embodiments of the method according to the invention mentioned here-above and hereinafter.

The invention also relates to a recording medium comprising computer executable program code configured to instruct a computer to perform the method according to the invention.

Therefore, the present invention pertains to:
1. Method for limiting a height of a stack of sheets in an output holder of an image reproduction system, the output holder configured to hold a stack of sheets printed upon by the image reproduction system according to a print job submitted to the image reproduction system, the image reproduction system comprising a control unit for controlling the receiving and printing of the print job, the method comprising the steps of
   - receiving a print job at the image reproduction system, the print job comprising image data to be printed and a plurality of print job settings,
   - starting printing the print job by the image reproduction system, and
   - delivering printed sheets of the print job to the output holder,
   wherein
   the plurality of print job settings comprises a setting for a maximum height of a stack in the output holder settable per print job, and
   the method comprises the steps of
   - establishing a value for the setting for the maximum stack height of the stack, and
   - stopping the delivering of the printed sheets of the print job to the output holder upon the stack reaching the maximum height set in the setting for the maximum stack height.
2. Method according to 1, wherein the method comprises the step of expressing the maximum stack height in a number of sheets in the stack or in a number of sets in the stack.
3. Method according to any one of 1 - 2, wherein the step of stopping the delivering of the printed sheets of the print job to the output holder upon the stack reaching the maximum height set in the setting for the maximum stack height, takes into account the height of printed sheets which are already present in the output holder before starting the printing of the print job.
4. Method according to any one of 1 - 3, wherein the method comprises the step of detecting a stack of sheets in the output holder before starting of the printing of the print job having set a maximum stack height in the print job settings, and removing the stack of sheets from the output holder before starting of the printing of the print job.
5. Method according to any one of 1 - 4, wherein the method comprises the step of entering a second maximum stack height for a submitted print job on a local user interface of the image reproduction system, wherein the second maximum stack height overrules the maximum stack height set in the print job settings of the print job.
6. Method according to any one of 1 - 5, wherein the step of establishing the value for the setting for the maximum stack height of the stack comprises the step of entering a value for the setting for the maximum stack height in a job submission tool suitable for submitting the print job to the image reproduction system.
7. Method according to 6, wherein the method comprises the step of determining the maximum stack height of the stack in the output holder that will be used while printing the print job, to be the maximum stack height entered when using the job submission tool.
8. Method according to any one of 1 - 7, wherein the step of establishing the value for the setting for the maximum stack height of the stack comprises the step of entering a value for a medium type to be used for printing the print job, the medium type having a medium property that determines a maximum stack height for the stack in the output holder for said medium type.
9. Method according to 8, wherein the method comprises the step of determining the maximum stack height of the stack in the output holder that will be used while printing the print job, to be the minimum of the maximum stack height entered in the job submission tool and the maximum stack height entered for the medium type.
10. Image reproduction system for printing a print job on sheets, the print job comprising image data and a plurality of print job settings, the image reproduction system comprising a print engine, an output holder configured to hold a stack of sheets printed upon by the printing engine according to a print job submitted to the image reproduction system, a control unit for controlling the receiving and the printing of the print job, and a receiving device for receiving the submitted print job,
   wherein
   the plurality of print job settings comprises a setting for a maximum height of a stack in the output holder settable per print job, and the control unit is configured to establish a value for the setting for the maximum stack height of the stack, and to stop delivering of printed sheets of the print job to the output holder upon the stack in the output holder reaching the maximum height set in the setting for the maximum stack height.
11. Recording medium comprising computer executable program code configured to instruct a computer to perform the method according to any one of 1 - 9 in an image reproduction system according to 10.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### Brief description of the drawings

- FIG. 1: shows schematically an image reproduction system in which the method according to the invention is applicable.
- FIG. 2: shows schematically a user interface window of a job submitter for submitting a print job to the image reproduction system according to the method of the invention.
- FIG. 3: shows schematically a user interface window for displaying media properties of a media used in a print job submitted to the image reproduction system according to the invention.
- FIG. 4: shows schematically the user interface window for representing a print job queue of the image reproduction system according to the invention.
- FIG. 5: shows a flow diagram of an embodiment of the method according to the invention.
- FIG. 6: shows a flow diagram of a further embodiment of the method according to the invention.

### Detailed description of the embodiments

A number of embodiments will now be described in conjunction with the drawings, in which same reference numerals refer to like elements.

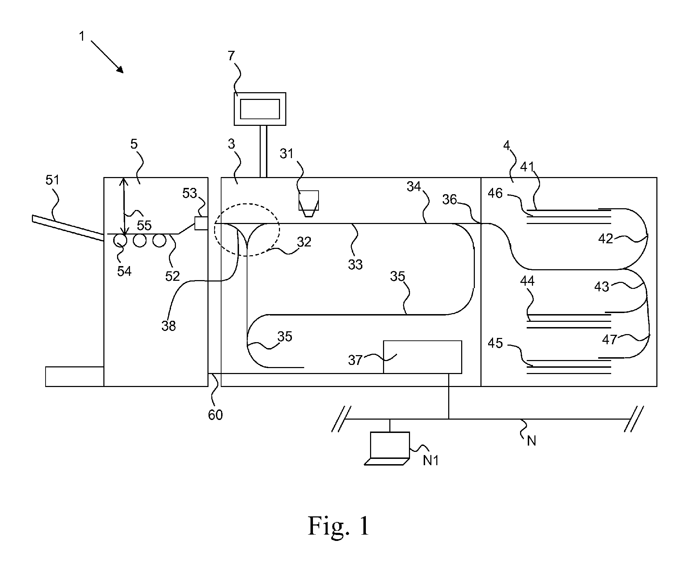

FIG. 1 shows schematically an image reproduction system 1 in which the method according to the invention is applicable. The image reproduction system 1, for purposes of explanation, is divided into an output section 5, a print engine and control section 3, a local user interface 7 and an input section 4. While a specific image reproduction system is shown and described, the disclosed embodiments may be used with other types of image reproduction system such as ink jet, electrographic, etc.
The output section 5 comprises at least one output holder 52 for holding printed image receiving material. The printed image receiving material is transported from the print engine and control section 3 via an inlet 53 to the output section 5. When a stack ejection command is invoked by the control unit 37, guiding means 54 are activated in order to eject the stack on the output holder 52 outwards to an external output holder 51. The operator can take the stack from the external output holder 51 for further processing the outputted documents in the stack. Finishing equipment may be added to or replace the external holder 51 for further finishing the ejected stack. The internal output holder 52 may not be reachable by an operator. In the latter case the operator cannot take the stack from the internal output holder 52 for further processing, but he can only take the stack from the external output holder 51 for further processing. The height of the stack on the output holder 52 is physically limited by the space height in the output section 5 as indicated by a double-sided arrow 55.
A print job may be printed by the print engine and control section 3 and outputted to the output section 5. The print job may have a setting for a maximum stack height in the output holder 52 according to the invention. The print engine may deliver printed sheets to the output holder 52 until the maximum stack height set in the print job settings is reached. At the moment that the maximum stack height is reached, the printing may stop and the operator can empty the output holder 52 or the stack is ejected to the external output holder 51 and the operator can empty this external output holder 51.. The emptying action of the operator is actually the ejection of the stack. Stopping of delivering sheets to the output holder 52 may imply that the printing by the image reproduction system is stopped. However, an image reproduction system having a large internal buffer for holding sheets does not have to stop printing, but can just stop the transfer of sheets from the large internal buffer to the output holder 52.
According to an alternative embodiment (not shown) the image reproduction system comprises a first output holder and a second output holder and sheets are automatically transferred to the second output holder when the first output holder has to be emptied. If the print job uses both the first and the second output holder, the maximum stack height according to the print job settings of the print job may be valid for both output holders.
The output section 5 is digitally connected by means of a cable 60 to the print engine and control section 3 for bi-directional data signal transfer.
The print engine and control section 3 comprises a print engine and a control unit 37 for receiving print jobs submitted to the image reproduction system 1 and controlling the printing process. The control unit is a computer or server or a workstation, connected to the print engine and connected to the digital environment of the image reproduction system, for example a network N for transmitting a submitted print job to the image reproduction system. In FIG. 1 the control unit 37 is positioned inside the print engine and control section 3, but the control unit 37 may also be positioned outside the print engine and control section 3 in connection with the network N, for example as a workstation N1. The print engine comprises a print head or print assembly 31 for ejecting or fixing marking material to image receiving material and a paper path 34, 32, 35 for transporting the image receiving material from an entry point 36 of the print engine and control section 3 to the inlet 53 of the output section 5. The print head or print assembly 31 is positioned near the paper path section 34. The print head or print assembly 31 may be an inkjet print head, a direct imaging toner assembly or an indirect imaging toner assembly. While an image receiving material is transported along the paper path section 34, the image receiving material receives the marking material from the print head or print assembly 31. A next paper path section 32 is a flip unit for selecting a different subsequent paper path for simplex or duplex printing of the image receiving material. The flip unit 32 may be also used to flip a sheet of image receiving material after printing in simplex mode before the sheet leaves the print engine and control section 3 via a curved section 38 of the flip unit 32 and via the inlet 53 to the output section 5. The curved section 38 of the flip unit 32 may not be present and the turning of a simplex page has to be done via another paper path section 35. The paper path sections 32, 34, 35 are exemplary for the invention but other embodiments of the paper path may be envisioned.
When the image receiving material has been printed upon, the image receiving material is transported to the inlet 53 of the output section 5.
The input section 4 may comprise at least one input holder 44, 45, 46 for holding the image receiving material before transporting the sheets of image receiving material to the print engine and control section 3. Sheets of image receiving material are guided from the input holders 44, 45, 46 by guiding means 42, 43, 47 to an outlet 36 for entrance in the print engine and control section 3.
The local user interface is suitable for displaying user interface windows for controlling a print job queue residing in the control unit 37. In another embodiment a computer N1 in the network N has a user interface for displaying and controlling the print job queue of the image reproduction system 1.

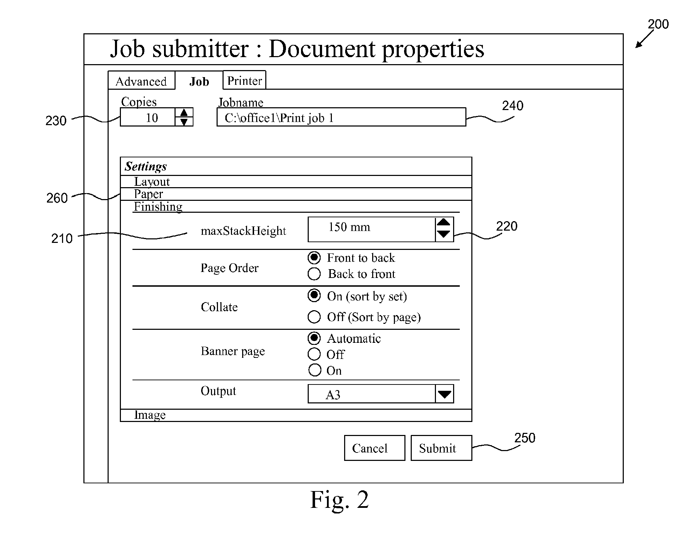

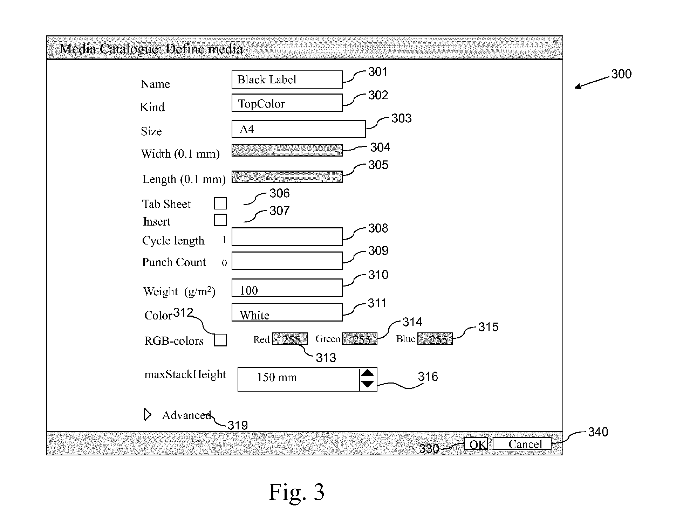

FIG. 2 shows a window 200 of a job submitter for submitting a print job to the image reproduction system 1 shown in FIG. 1. The job submitter may be part of a pre-processing application or a printer driver. The pre-processing application may comprise a hot folder mechanism for receiving document files in a hot folder and automatically retrieving the document files subsequently from the hot folder in order to transmit the document files subsequently to the image reproduction system.
FIG. 2 shows a window 200 comprised in a printer driver application.
From three tabs "Advanced", "Job", "Printer", the second tab "Job" is selected.
A number of copies may be selected in a first entry field 230. A job name may be entered in a second entry field 240.
A plurality of settings may be set for a layout of the print job and a medium type of the print job. The medium type of the print job may be defined in a tab section 260 called "Paper". When expanding this tab section 260, the medium type intended to be used for the print job will be displayed. The tab section 260 may also comprise an entrance item to enter a user interface window for defining or changing the properties of the medium type. Such a user interface window is shown in FIG. 3.
Image parameters and finishing parameters may be set. The finishing parameters are selected and expanded. Finishing parameters concern a page order, a collate option, a banner page option and an output option. According to the invention one of the finishing parameters is a maximum stack height option 210 for defining a maximum height of a stack in the output holder of the image reproduction system 1 as shown in FIG.1. In a selection box 220 a maximum stack height of 150 mm is selected from a list of maximum stack height options (not shown). The list may comprise for example heights of 50 mm, 100 mm, 122 mm, 150 mm, 200 mm, 250 mm, until a maximum stack height that is limited by the physical space 55 as shown in FIG. 1 is reached. The list may also comprise a "don't care" option if no maximum stack height is required for the print job. The "don't care" option may be the default option for the maximum stack height setting. According to an alternative embodiment the list also comprises heights measured in number of sheets or number of sets to be delivered in the output holder. The selection box 220 may also be in the form of a combo box or a free format field wherein the user is able to enter a specific value in mm, cm, a number of sheets or a number of sets. The maximum stack height option 210 is displayed in the form of a selection drop-down box. Other forms of the maximum stack height option may be envisioned, for example a set of radio buttons, a combo box, a free format field, etc.

The selected print job in the second entry field 240 has a job name "print job 1". The print job named "print job 1" may be submitted to the image reproduction system by means of the submit button 250.

Fig. 3 shows a user interface window 300 according to an embodiment of the invention. The user interface window 300 comprises entry fields 301-316 for defining or changing medium properties of a medium type.
A first entry field 301 is used to enter a name of the medium type, for example "Black Label". A second entry field 302 is used to enter a kind of the medium type, for example "TopColor", i.e. an indication of the quality or brand of the medium type. A third entry field 303 is used to enter a size of the medium type, for example A4. If the medium type has a size which is not predefined by a print standard, a fourth entry field 304 and a fifth entry field 305 may be used to enter a width respectively a length of the medium type. A sixth entry field 306 is a checkbox for checking if the medium type is a tab medium. A seventh entry field 307 is a checkbox for checking is the new medium type is used as an insert. An eighth entry field 308 is used to enter a cycle length of the medium type. A ninth entry field 309 is used to enter a punch count of the medium type. A tenth entry field 310 is used to enter a weight of one sheet of the medium type, for example in gram/m². An eleventh entry field 311 is used to enter a colour of the medium type, for example White. A twelfth entry field 312 is a checkbox for checking if specific RGB values 413, 414, 415 for respectively red, green and blue are required with respect to screen colours of a preview. A thirteenth entry field 316 is used for defining the maximum stack height of the medium type. The entry field 316 is in the form of a selection box but use of radio buttons, use of a combo box, or use of a free format field may be envisioned. By defining the maximum stack height in the entry field 316 for the medium type, a print job using this medium type will have implicitly a setting for the maximum stack height in mm, in cm, or in a number of sheets or in a number of sets.

A reference link 319 to entry fields for advanced media properties is presented at the end of the list of entry fields 301-316. Other entry fields than the mentioned entry fields may be envisioned and fall under the scope of the invention. A confirmation button 330 is used when values entered for the entry fields are to be confirmed and saved. A cancel button 340 is used for cancelling the user action on the user interface window 300.

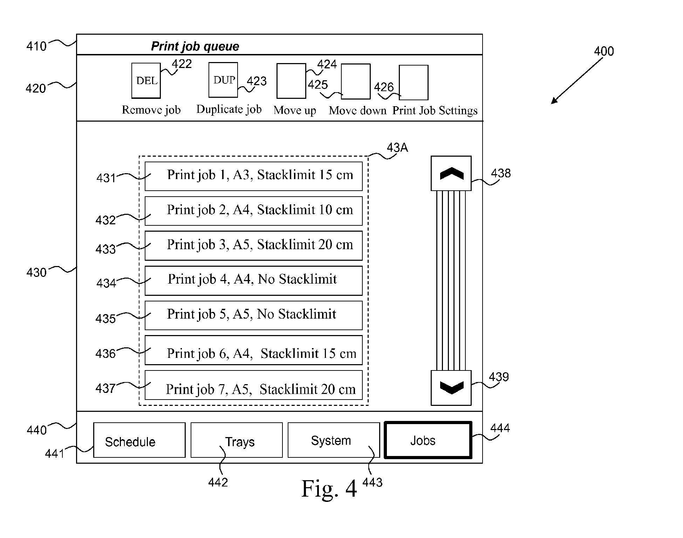

FIG. 4 shows a user interface window 400 of the image reproduction system 1 according to the invention. The user interface window 400 is opened at the local user interface 7 in FIG. 1 and shows a representation of the print job queue residing in the control unit 37 in FIG. 1.

The user interface window 400 comprises a title section 410, a user action section 420, a print job queue section 430 and a navigation section 440.

The user action section 420 comprises image items 422 - 426 to be selected for executing actions on a print job queue 43A in the print job queue section 430.
A first image item 422 represents a job removal action.
A second image item 423 represents a job duplication action.
A third image item 424 represents a move up action.
A fourth image item 425 represents a move down action.
A fifth image item 426 represents an action to retrieve and display print job settings of a selected print job in a properties window.

The navigation section 440 comprises a first image item 441 for navigating to a schedule with a timeline and medium types needed for the print jobs, a second image item 442 for navigating to an overview of the input trays and the content of the input trays, a third image item 443 for navigating to the system settings and a fourth image item 444 for navigating to the print jobs in the print job queue 43A. In the user interface window 400 the fourth image item 444 is selected.

The print job queue section 430 comprises a representation of the print job queue 43A. The print job queue 43A comprises at least one print job. FIG. 4 shows a plurality of print jobs 431 - 437 in the print job queue 43A in a sequence order from top to bottom. A first print job 431 will be printed real soon after the print job that is currently printed by the image reproduction system is ready. A last print job 437 will be printed if the preceding print jobs 431 -436 are ready. Each print job 431 - 437 in the print job queue 43A is selectable by a mouse or by a finger or stylus in case of a touch screen. A sequence order of the print jobs 431 - 437 in the print job queue 43A may be changed by selecting a print job in the print job queue 43A and then activating the fourth image item 424 or the fifth image item 425 in order to move the selected print job one position up or down respectively in the print job queue 43A. In a further embodiment in case of a touch screen a position of a print job 431 - 437 in the print job queue 43A may be changed by dragging and dropping the appropriate print job to another position in the print job queue 43A. The print job queue 43A is scrollable by activating an upward scrolling button 438 or a downward scrolling button 439. Each print job 431 - 437 in the print job queue 43A may be displayed with a number of print job settings of the print job, such as an identifying name of the print job ("Print job 1 "), a size of the image receiving material to be used for the print job ("A3"), a maximum stack height to be used for the print job ("15 cm"), etc. For convenience reasons a small relevant number of properties for each print job 431 - 437 is displayed in the print job queue 43A.

A use of the fifth image item 426 representing the print job settings of the print job will be further elucidated. The operator is able to select a print job from the print job queue 43A. After the selection of the print job the operator may activate the fifth image item 426. By activating the fifth image item 426 the print job settings of the selected print job are displayed in another window. Such a window may be similar to the user interface window 300 shown in FIG. 3. The operator is now able to establish a value for the setting of the maximum stack height. In this way the operator is able to enter or change the setting for the maximum stack height for a print job residing in the print job queue 43A of the image reproduction system.

A maximum stack height may be set for a relative large print job, for example a print job which has an amount of output that exceeds the height of the output holder once or several times. For a relative large job a stack ejection before the start of the relative large job may be planned automatically - for example by a rule based system - or manually by the operator.
A maximum stack height may be set for a relative small print job. When relative small jobs are consecutively scheduled in the print job queue 43A no stack ejection may take place in between the consecutive print jobs. The control unit may register stack ejections and check - before printing the consecutive print jobs - if the amounts of sheets in the output holder at any time during the planned printing of the consecutive print jobs will exceed a maximum stack height of one of the consecutive print job. When a print job is detected that will exceed its maximum stack height set in the print job settings corresponding to the print job when printing the print job, the control unit may schedule a stack ejection before the detected print job.

According to an embodiment the criteria employed by the operator for maximum stack heights per print job may be encoded in software for a rule base system comprising rules for maximum stack heights based on the print job settings of the print jobs in the print job queue of the image reproduction system and/or based on media properties of a medium type specified in the print job settings of the print job. The rule based system may be part of the control unit of the image reproduction system according to the invention. The application of the rules in the rule based system may lead to an automatic stack ejection without intervention of the operator if a maximum stack height for a print job is reached.

According to an embodiment feedback is displayed when a maximum stack height set in the print job settings of a print job are in conflict with physical boundaries of the output holder, or in conflict with a maximum stack height set in the media properties of a medium type which medium type is intended to be used for the print job. The operator is able to select the correct maximum stack height from a user interface window (not shown) before the printing of the print job will start.

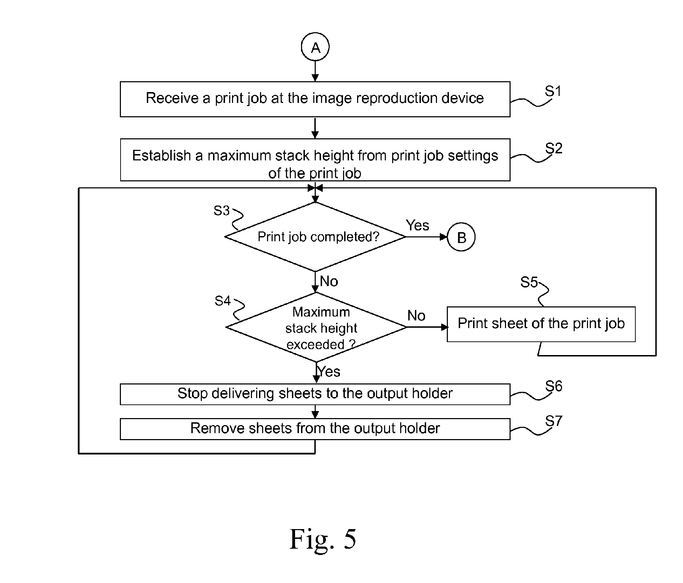

FIG. 5 shows a flow diagram of an embodiment of the method according to the invention. A starting point A leads to the first step S1.

A print job may be created by a print job creation tool like a print job submitter, a printer driver, a document creation application, a document preparing tool, etc. The print job comprises image data to be printed and a plurality of print job settings. Among the plurality of print job settings a value for the setting for the maximum stack height for the output of the print job is set according to the invention. Usually the creation of the print job takes place outside the image reproduction system on a computer in a - wired or wireless - network connected to the image reproduction system. The print job has been submitted to the image reproduction system via the network, wired or wireless.

In the first step S1 of the method the print job is received at the image reproduction system by the control unit of the image reproduction system. The print job is scheduled in a print job queue residing in memory of the control unit.

In a second step S2 a maximum stack height is established from the print job settings of the print job. The maximum stack height may be directly retrieved from the print job settings of the print job or may be retrieved from a dedicated medium type setting for the maximum stack height of the medium type which medium type is set in the print job settings. In the latter case the control unit may consult a media list or media catalogue comprising media properties of medium types defined for the image reproduction system.

In a third step S3 it is checked if the print job is completed, i.e. if all sheets of the print job are printed. If so, the method ends in endpoint B.
If not so, the method proceeds to a fourth step S4.

In the fourth step S4 it is checked whether or not the maximum stack height is reached. This may be checked by reading out sensors in the output holder or by counting the already printed sheets. In the latter case the already printed sheets on the stack may be originated from print jobs which have preceded the current print job. Since the medium type and the thickness of a sheet of the medium type used by the current print job and used by any preceding print job which printed sheets are in the stack, are known - the thickness is a media property - a simple calculation provides the height of the stack in the output holder formed by the already printed sheets. If the maximum stack height is reached, the method proceeds to a sixth step S6. If the maximum stack height is not reached, the method proceeds to a fifth step S5.

In a fifth step S5 a sheet is printed according to the print job and delivered on top of the stack in the output holder. After the sheet is printed the method returns to the third step S3.

In the sixth step S6 delivering of printed sheets to the output holder is stopped. The print process may be temporarily stopped or an internal buffer may be stopped to deliver sheets to the output holder. Printing may be temporarily stopped to give the operator an opportunity to empty the output holder.

In a seventh step S7 the stack which has reached the maximum stack height is removed from the output holder. The removal may be an ejection from the output holder to an external tray. The removal may also be a manual removal of the stack of sheets by an operator. After the removal of the stack from the output holder the method returns to the third step S3.

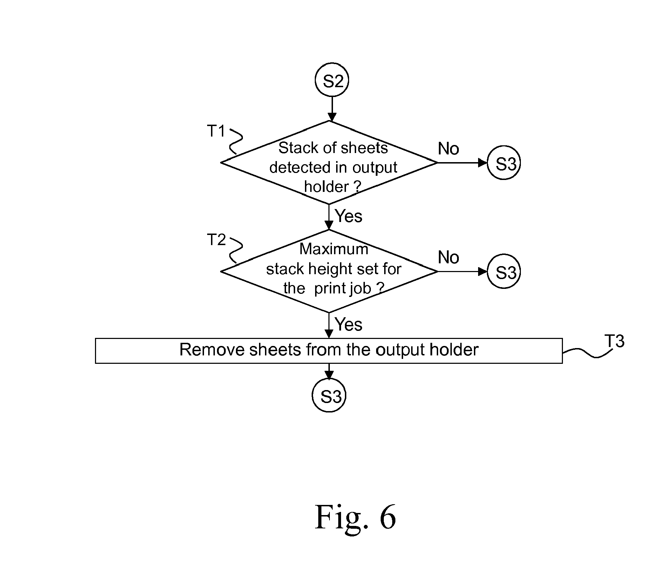

FIG. 6 shows a flow diagram of another embodiment of the method according to the invention. This embodiment comprises the embodiment of FIG. 5 with additional steps T1 - T3 between the second step S2 and the third step S3 of the embodiment in FIG. 5.

In a first step T1 it is checked whether or not there is a stack of sheets in the output holder before the start of the printing of the print job. This can be checked by a detection of a stack in the output holder by means of sensors or cameras in the output holder. This can also be checked by calculations of number of sheets ejected in previous print jobs in combination with registrations of former stack ejections or stack removals by the control unit. If there is no stack of sheets in the output holder, the method can proceed with the third step S3 in FIG. 5. If there is a stack of sheets in the output holder, the method can proceed to a second step T2.

In the second step T2 it is checked whether there is set a maximum stack height in a print job setting of the print job or in a media property of a medium type used in the print job. If there is no maximum stack height set, for example a "don't care" option for the maximum stack height setting, the method proceeds to the third step S3 of FIG. 5.
If there is a maximum stack height set in the print job settings of the print job or in a media property of the medium type used in the print job, the method proceeds to a third step T3.

In the third step T3 the stack of sheets is removed from the output holder before starting of the printing of the print job. The removal may be an automatic stack ejection or a manual removal by the operator. After removal of the stack the method proceeds to the third step S3 in FIG. 5, the print job can start and the empty output holder will be filled with sheets from the print job. This is advantageous if it is not desired to have sheets of previous print jobs in the stack together with sheets of the starting print job. This may be for example the case when the output of the starting print job needs to be packed in boxes of a predetermined height. This may be for example the case when the output of the starting job needs to be finished by means of a finishing device which has a stack height limitation for insertion or processing of a printed stack of sheets in the finishing device.

The skilled person will recognise that other embodiments are possible within the scope of the appended claims.

## Claims

1. Method for limiting a height of a stack of sheets in an output holder of an image reproduction system, the output holder configured to hold a stack of sheets printed upon by the image reproduction system according to a print job submitted to the image reproduction system, the image reproduction system comprising a control unit for controlling the receiving and printing of the print job, the method comprising the steps of
- receiving a print job at the image reproduction system, the print job comprising image data to be printed and a plurality of print job settings, the plurality of print job settings comprises a setting for a maximum height of a stack in the output holder settable per print job in a job submission tool,
- establishing a value for the setting for the maximum stack height of the stack from the plurality of print job settings,
- starting printing the print job by the image reproduction system,
- delivering printed sheets of the print job to the output holder, and
- stopping the delivering of the printed sheets of the print job to the output holder upon the stack reaching the maximum height set in the setting for the maximum stack height.
wherein
the step of establishing the value for the setting for the maximum stack height of the stack comprises the step of entering a maximum stack height value per medium type to be used for printing the print job, the medium type having a medium property that determines a maximum stack height for the stack in the output holder for said medium type,
and the method comprises the step of determining the maximum stack height of the stack in the output holder that will be used while printing the print job, to be the minimum of the maximum stack height entered in the job submission tool and the maximum stack height entered per medium type used in the print job.

2. Method according to claim 1, wherein the method comprises the step of expressing the maximum stack height in a number of sheets in the stack or in a number of sets in the stack.

3. Method according to any of the preceding claims, wherein the step of stopping the delivering of the printed sheets of the print job to the output holder upon the stack reaching the maximum height set in the setting for the maximum stack height, takes into account the height of printed sheets which are already present in the output holder before starting the printing of the print job.

4. Method according to any of the preceding claims, wherein the method comprises the step of detecting a stack of sheets in the output holder before starting of the printing of the print job having set a maximum stack height in the print job settings, and removing the stack of sheets from the output holder before starting of the printing of the print job.

5. Method according to any of the preceding claims, wherein the method comprises the step of entering a second maximum stack height for a submitted print job on a local user interface of the image reproduction system, wherein the second maximum stack height overrules the maximum stack height set in the print job settings of the print job.

6. Image reproduction system for printing a print job on sheets, the print job comprising image data and a plurality of print job settings, the image reproduction system comprising a print engine, an output holder configured to hold a stack of sheets printed upon by the printing engine according to a print job submitted to the image reproduction system, a control unit for controlling the receiving and the printing of the print job, and a receiving device for receiving the submitted print job,
wherein
the plurality of print job settings comprises a setting for a maximum height of a stack in the output holder settable per print job, and the control unit is configured to establish a value for the setting for the maximum stack height of the stack, to stop delivering of printed sheets of the print job to the output holder upon the stack in the output holder reaching the maximum height set in the setting for the maximum stack height, to enter a maximum stack height value per medium type to be used for printing the print job, the medium type having a medium property that determines a maximum stack height for the stack in the output holder for said medium type, and to determine the maximum stack height of the stack in the output holder that will be used while printing the print job, to be the minimum of the maximum stack height entered in the job submission tool and the maximum stack height entered per medium type used in the print job.

7. Recording medium comprising computer executable program code configured to instruct a computer to perform the method according to any of the claims 1 - 5 in an image reproduction system according to claim 6.
